# EUROPEAN PATENT APPLICATION

(11) **EP 1 251 470 A2**
(43) Date of publication of application: **23.10.2002**
(21) Application number: 02008851.4
(22) Date of filing: 19.04.2002
(51) Int. Cl.: G07F 19/00

(54) **International-online automatic cash transaction system**

(30) Priority: 20.04.2001 JP 2001122136
(71) Applicant: Hitachi, Ltd., Chiyoda-ku, Tokyo 101-8010 (JP)
(72) Inventor: Minami, Tadashi, Hitachi, Ltd., Int. Prop. Group, Chiyoda-ku, Tokyo 100-8220 (JP); Goto, Kanzen, Hitachi, Ltd., Int. Property Group, Chiyoda-ku, Tokyo 100-8220 (JP)
(74) Representative: Strehl Schübel-Hopf & Partner

(57) **Abstract**

An international-online automatic cash transaction system including a domestic financial institution host 10A connected to an abroad financial institution host 10B via an international network and a plurality of automated teller machines (ATMs) connected to the domestic financial institution host via a domestic network, in which when a deposit or withdrawal transaction using an international cash card of which account is in a foreign financial institution is conducted by one of ATMs, a handling fee required for the transaction is displayed before the transaction is conducted to allow a customer to select whether the transaction should be continued or not, a transaction amount is automatically converted into an amount in the currency of the customer's account in accordance with the rate of exchange at that time point, and the foreign financial institution is notified of the resultant amount.

## Description

### BACKGROUND OF THE INVNETION

### (1) Field of the Invention

The present invention relates to an international-online automatic cash transaction system using an automated teller machine (ATM) and, more particularly, to an international-online automatic cash transaction system provided with an ATM capable of dealing with an international cash card.

### (2) Description of the Related Art

An online banking system comprising ATMs can deal with cash cards of a plurality of tie-up financial institutions by ATMs. When a customer withdraws or deposits money through the use of an ATM connected to a host in a financial institution, a financial institution identifier and an account number are read out from a cash card presented by the customer, a financial institution host of which the account is inquired is determined from the financial institution identifier, and transaction information is communicated between the financial institution hosts.

The tip-up of financial institutions, realizing mutual use of ATMs is widened beyond tie-ups of domestic financial institutions including city banks and local banks and, recently, is being widened to an international online banking system, which enables a cash transaction with an international cash card issued by a financial institution in a foreign country.

For example, Japanese Unexamined Patent Publication No. Hei-10-3564 discloses an automatic transaction system. In the system, in the case of conducting a withdrawal transaction through an ATM, transaction information entered to the ATM, such as data of the amount of money, transaction card (cash card) information, personal identification number (PIN), and the like is transmitted to a center, and the center determines whether a transaction account exists in Japan or not. If the account exists in a foreign country, the transaction amount in yen is converted to the amount in the currency of the country where the account exists. After that, a withdrawal request is transmitted to the center in the foreign country where an account ledger file exists. In the Patent Publication, a transaction amount converted to the foreign currency is displayed to the customer in the case of withdrawing money from a foreign account.

Between domestic financial institutions, the opportunities of using ATMs of a financial institution by customers of another financial institution and the opportunities of using ATMs of said another financial institution by customers of the financial institution can be regarded as the same more or less. Consequently, the financial institutions can have a tie-up with each other in equal positions. When a customer uses any of ATMs of other financial institution which is not the issuer of the cash card, the handling fee may be usually the same.

### SUMMARY OF THE INVENTION

However, in the case of conducting an automatic cash transaction by using an international cash card, since the opportunities of using ATMs of a domestic financial institution by customers of an abroad financial institution as the issuer of the international cash card and the opportunities of using ATMs of the abroad financial institution by customers of the above domestic financial institution are substantially different from each other, the handling fee varies according to the tie-up between the financial institutions. Moreover, since the transaction information is transmitted and received via an international communication line, it is expected that the handling fee is unexpectedly large for the customer.

An object of the invention is to provide an international-online automatic cash transaction system convenient for the user of an international cash card.

Another object of the invention is to provide an international-online automatic cash transaction system having a high degree of flexibility in transaction for the user of an international cash card.

To achieve the object, the present invention provides an international-online automatic cash transaction system having a domestic financial institution host connected to an abroad financial institution host via an international network and a plurality of automated teller machines connected to the domestic financial institution host via a domestic network, said system comprising: means for displaying, when a deposit or withdrawal transaction using an international cash card of which account is in a foreign financial institution is conducted by one of said automated teller machines, a handling fee required for the transaction to allow a customer to select whether the transaction should be continued or not before the transaction is completed; and means for automatically converting a transaction amount into an amount in a currency of the customer's account in accordance with an exchange rate at that time point and notifying the abroad financial institution of the resultant amount.

In a preferred embodiment of the invention, before a transaction is completed, the handling fee and the exchange rate are displayed on the display screen of the automated teller machine.

In an embodiment of the international-online automatic cash transaction system according to the invention, the system further includes a transaction intermediation system connected to the international network and, in a process of conducting a deposit or withdrawal transaction using an international cash card by the automated teller machine, transaction data is communicated between the domestic financial institution host and the foreign financial institution as the issuer of the international cash card via the transaction intermediation system.

In the case where conversion of the denomination of currency and management of the handling fee are carried out by the transaction intermediation system, the domestic financial institution host obtains handling fee information from the transaction intermediation system at the time of inquiring of the foreign financial institution about the account, and notifies the automated teller machine of the handling fee information. Alternately, the domestic financial institution host may have a management table for indicating an exchange rate between the domestic currency and foreign currencies and a management table for indicating handling fee information regarding an automatic transaction to be conducted between the domestic financial institution and foreign financial institutions, thereby to convert the denomination of currency and notify the automated teller machine of the handling fee.

In an embodiment of the invention, some of the automated teller machines has means for accepting deposit by cash in the domestic currency, a bill, and a check, so that the amount of a bill or check can be deposited to a customer's account.

The other objects and features of the invention will become apparent from the following description of embodiments made with reference to the drawings.

### BRIEF DESCRIPTION OF THE DRAWINGS

FIG. 1 is a diagram showing an example of the general configuration of an international-online automatic cash transaction system according to the invention.
FIG. 2 is a block diagram showing an example of an ATM 20 used for the international-online automatic cash transaction system.
FIG. 3 is a block diagram showing another example of the ATM 20.
FIG. 4 is a flowchart showing a main portion of an automatic transaction control routine executed by the ATM 20 illustrated in FIG. 2.
FIG. 5 is a flowchart showing a control sequence of a withdrawal transaction in the automatic transaction control routine.
FIG. 6 is a flowchart showing an account inquiry processing routine 300 to be executed by a host 10A of a financial institution A in FIG. 1, an account inquiry processing routine 400 to be executed by a network approval host 50, and an account confirmation processing routine 500 to be executed by a host 10B of a financial institution B.
FIG. 7 is a flowchart showing a processing routine 310 of transaction notification to other financial institution, to be executed by the host 10A of the financial institution A in FIG. 1, a transaction notification processing routine 410 to be executed by the network approval host 50, and a processing routine 510 of transaction accepted by other financial institution to be executed by the host 10B of the financial institution B.

### DESCRIPTION OF THE PREFERRED EMBODIMENTS

Embodiments of the present invention will be described in detail hereinbelow with reference to the drawings.

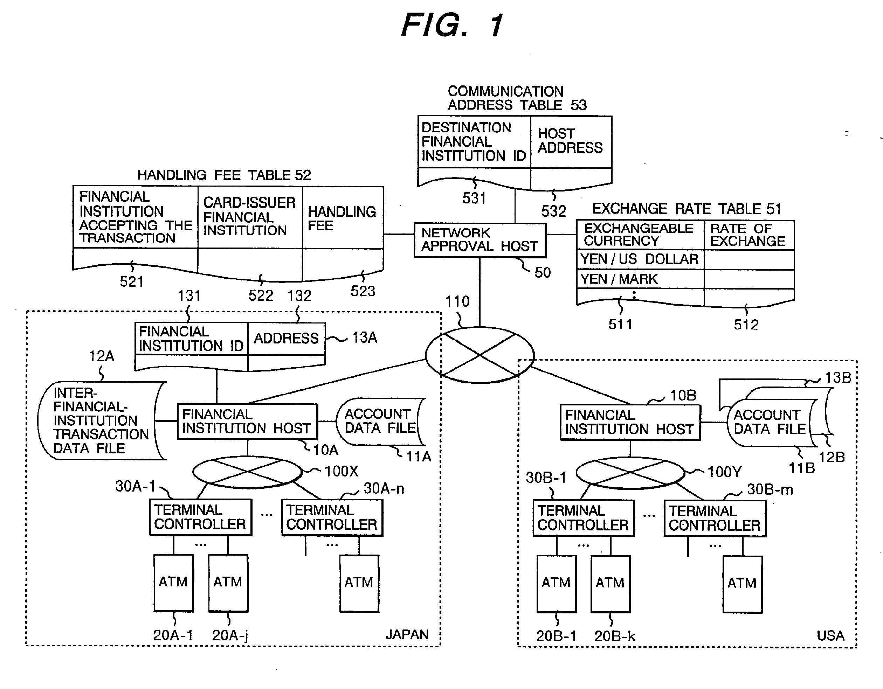

FIG. 1 shows an embodiment of an international-online automatic cash transaction system according to the invention.

The international-online automatic cash transaction system includes financial institution hosts 10 (10A, 10B, ...) of a plurality of countries connected to each other via an international network 110 and a network approval host 50 through which international transactions among the financial institutions are conducted. A financial institution in each of the countries having an agreement regarding use of an international cash card can reflect data of a domestic automatic cash transaction to an account of an abroad financial institution via the network approval system 50.

In the embodiment, deposit and withdrawal transactions conducted between a financial institution A having the main office in Japan whose denomination of currency is yen (¥) and a financial institution B having the main office in U.S.A. whose denomination of currency is dollars ($) will be described. The invention can be similarly applied to an automatic cash transaction between financial institutions in countries other than Japan and U.S.A., such as the United Kingdom, France, and Germany.

Automated teller machines (hereinbelow, called ATMs) 20A (20A-1, 20A-2, ...) disposed in branches of the financial institution A in various parts of Japan are connected to the host 10A of the financial institution A via terminal controllers 30A (30A-1 to 30A-n) and a domestic network 100X. Similarly, in U.S.A., ATMs 20B (20B-1, 20B-2, ...) are connected to the host 10B of the financial institution B via terminal controllers 30B (30B-1 to 30B-n) and an American network 100Y in U.S.A.

The host 10A of the financial institution A is provided with: an account data file 11A for storing transaction data and account balance of each of customers in correspondence with the account number of a cash card issued to the customer; an inter-financial-institution transaction data file 12A for storing data of transactions with other financial institutions; and a communication address table 13A indicative of a corresponding relation between a financial institution ID 131 and a communication address 132. Similarly, the host 10B of the financial institution B is provided with: an account data file 11B for storing transaction data and account balance of each of customers in correspondence with the account number of a cash card issued to the customer by the financial institution B; an inter-financial-institution transaction data file 12B for storing data of transactions with other financial institutions; and a communication address table 13B.

Each of the ATMs 20A of the financial institution A allows automatic transactions conducted by using not only the cash cards issued by the financial institution A but also cash cards issued by other domestic tie-up financial institutions, and international cash cards issued by abroad tie-up financial institutions. When a customer makes an automatic deposit or withdrawal transaction by the ATM 20A with a cash card issued by another domestic financial institution, the financial institution host 10A makes an online inquiry of the host of the financial institution (not shown) as the issuer of the card about the account, after that, executes an automatic cash transaction, and reflects the result of the transaction to the customer's account.

As for an automatic deposit and withdrawal transaction using an international cash card by the ATM 20A, as will be described hereinlater, the financial institution host 10A makes an inquiry of the host of an abroad financial institution as the issuer of the card about the account via the network approval host 50 connected with the international network 110, executes an automatic deposit and withdrawal transaction, and reflects the result of the transaction to the account in a foreign country. In the invention, even in the case where delivery of an international cash card to a customer and management of an expiry are carried out by an organization different from the financial institution of the customer's account, the financial institution of the account is defined as the issuer of the international cash card.

The host 10A of the financial institution A communicates with hosts of other financial institutions via the network approval host 50 and makes the transaction result reflect to the customer's account data file 11A with respect to, not only the deposit and withdrawal transactions conducted by the ATMs 20A in the branches, but also automatic cash transactions conducted by ATMs of other tie-up domestic financial institutions by customers each having a cash card issued by the financial institution A, and automatic cash transactions conducted in abroad by ATMs of tie-up financial institutions by customers each having an international cash card issued by the financial institution A.

Each of the ATMs 20B of the financial institution B also allows automatic transactions conducted by using not only the cash cards issued by the financial institution B but also cash cards issued by other tie-up financial institutions in U.S.A, and international cash cards issued by tie-up abroad financial institutions. Automatic deposit and withdrawal by using an international cash card is executed after the financial institution host 10B inquires of an abroad financial institution host as the issuer of the card about the account via the network approval host 50, and the transaction result is reflected to an abroad account of the customer via the network approval host 50.

The host 10B of the financial institution B communicates with hosts of other financial institutions via the network approval host 50 and makes the transaction result reflect to the customer's account data file 11B with respect to automatic cash transactions conducted by ATMs of other financial institution in U.S.A. by customers each having a cash card issued by the financial institution B and automatic cash transactions conducted by ATMs of other tie-up abroad financial institutions by customers each having an international cash card issued by the financial institution B.

In the case of reflecting the amount deposited or withdrawn in yen by the ATM 20A with an international cash card to the account of the financial institution in U.S.A. after converting the amount to U.S. dollars, or on the contrary, in the case of reflecting the amount deposited or withdrawn in U.S. dollars by the ATM 20B with an international cash card to a financial institution account in Japan after converting the amount into yen, the denomination of currency has to be converted according to the exchange rate. In association with the automatic cash transaction using an international cash card, it costs the customer some handling fee for the communication of transaction data and cash settlement performed between two financial institutions. The amount of handling fee solely depends on the tie-up relation between the financial institutions and it may be waived as service for customers.

In the embodiment described hereinbelow, the network approval host 50 has an exchange rate table 51 for indicating the latest rate of exchange 512 in correspondence with a combination of exchangeable currencies 511, a handling fee table 52 for defining a handling fee 523 in correspondence with a combination of a financial institution 521 accepting the transaction using the international cash card and a card-issuer financial institution 522, and a communication address table 53 defining the relation between a destination financial institution ID 531 and a financial institution host address 532.

When a financial institution accepting a transaction communicates with a card-issuer financial institution via the network approval host 50, the network approval host 50 notifies the financial institution accepting the transaction of the handling fee, and notifies the card-issuer financial institution of a transaction amount after denomination conversion. Alternately, the financial institution accepting the transaction and the card-issuer financial institution can directly communicate with each other without involving the network approval host 50. In this case, it is sufficient to prepare the exchange rate table 51, handling fee table 52, and communication address table 53 at the host of each financial institution and refer to the tables by the financial institution hosts as necessary.

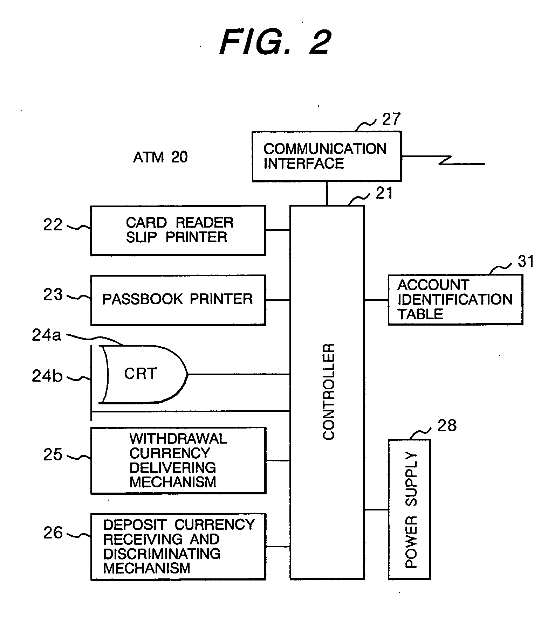

FIG. 2 is a block diagram showing the configuration of the ATM 20 (20A, 20B) as a component of the international-online automatic cash transaction system according to the invention.

The ATM 20 comprises: a card reader and slip printer 22 for reading out an account number including a financial institution identifier and other card information from a magnetic stripe adhered to a cash card or an LSI chip embedded in a cash card, updating a part of the card information as necessary when a transaction is conducted, and issuing a receipt indicative of the transaction result; a passbook printer 23; a display (CRT) 24a with a touch panel 24b for displaying operation guidance and transaction data; a withdrawal currency delivering mechanism 25 for automatically delivering cash of an amount designated by the customer in a withdrawal transaction in the currency of the country where the ATM is installed; a deposit currency receiving and discriminating mechanism 26 for sequentially receiving cash in the currency of the country where the ATM is installed, inserted by the customer in a deposit or transfer transaction, and discriminating the cash; a communication interface 27 for performing communication with the terminal controller 30; a power supply 28; and a controller 21 connected to those elements.

The controller 21 includes a processor, a memory for storing a control program, and a memory for storing data. The controller 21 is provided with an account identification table 31 used for identifying the financial institution as the issuer of the cash card presented by the customer, guides customer's operation on the CRT screen in accordance with a transaction control sequence defined by the control program, and automatically conducts a transaction selected by the customer while communicating with a financial institution host via the terminal controller 30. It is also possible to provide the account identification table 31 to the terminal controller 30 (30A, 30B) or the financial institution host 10 (10A, 10B) and make an inquiry of a higher layer apparatus by each ATM every time an account has to be identified.

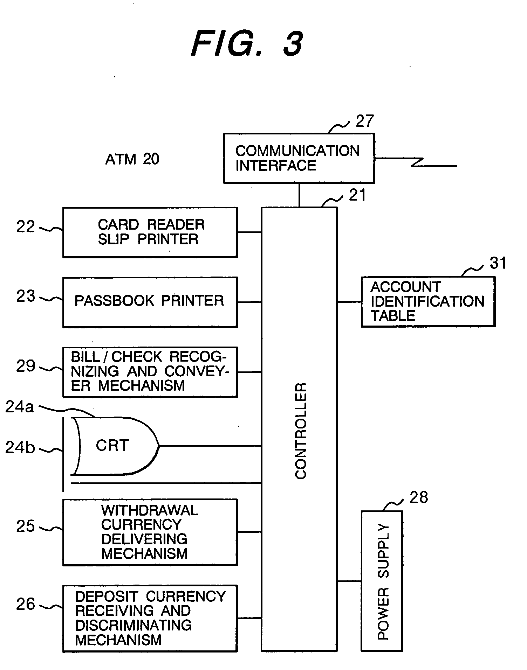

FIG. 3 shows another configuration example of the ATM 20 (20A, 20B) applied to the international-online cash transaction system. The ATM has a bill/check recognizing and conveyer mechanism 29 so as to be able to provide deposit service not only by cash but also by a bill and a check.

As an embodiment of the invention, the operation of the international-online automatic cash transaction system performed in the case where a customer having an international cash card issued by the American financial institution B deposits or withdraws money in Japanese yen during a stay in Japan by using the ATM 20A having the configuration of FIG. 2 and belonging to the financial institution A tied-up with the financial institution B will be described.

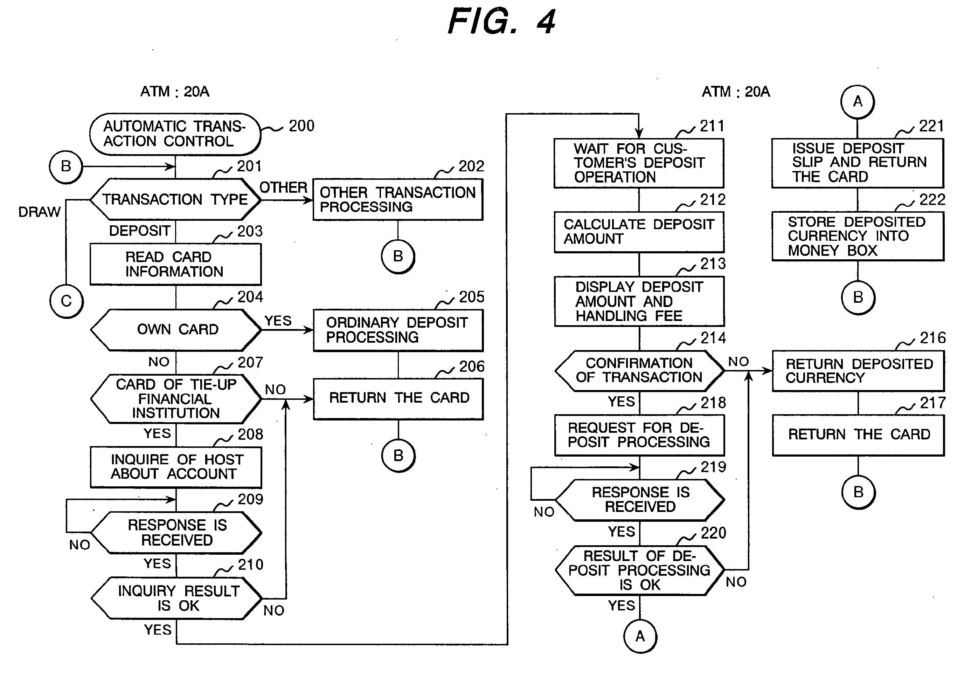

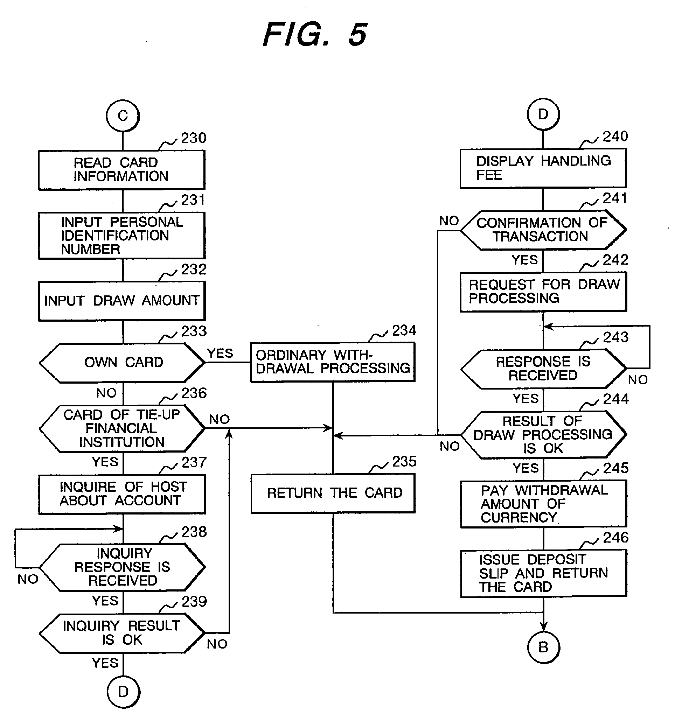

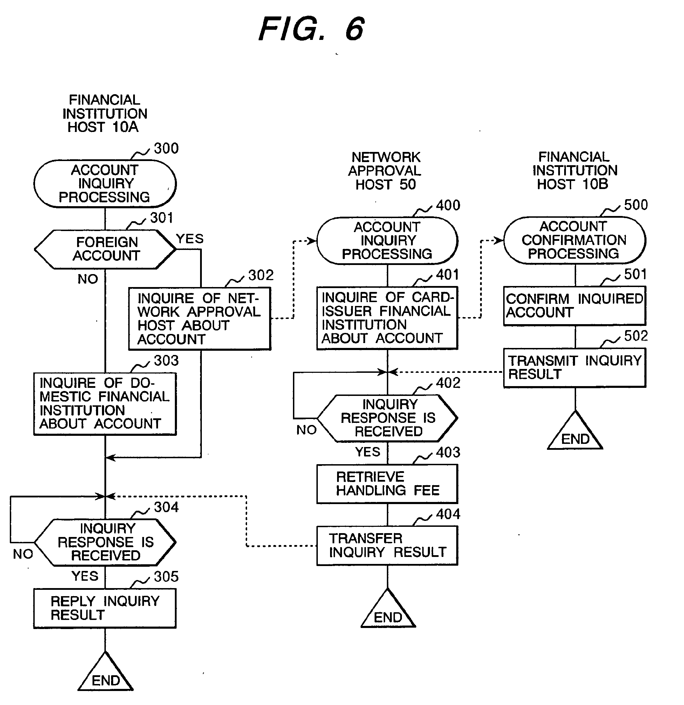

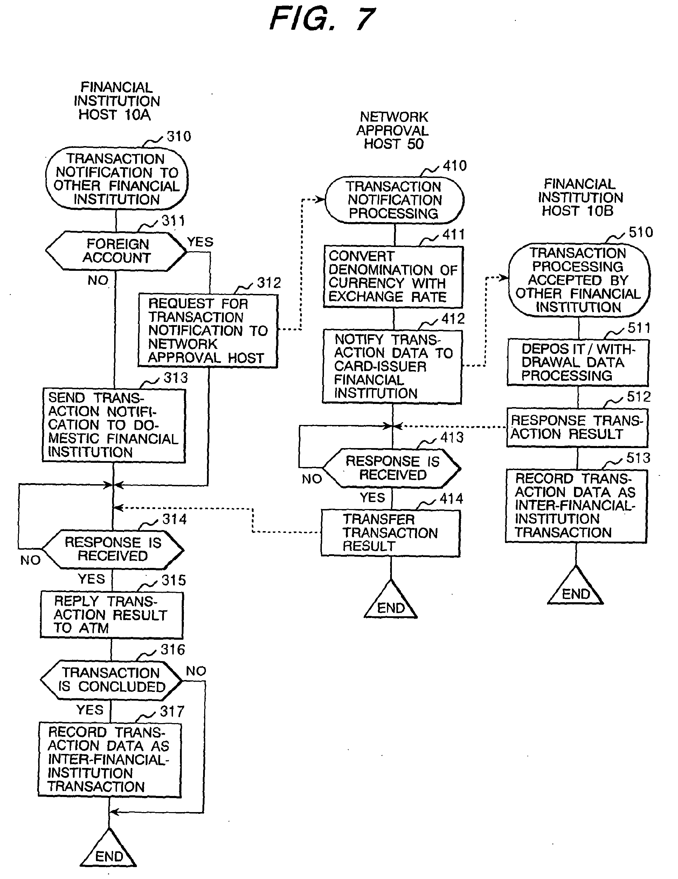

FIGS. 4 and 5 show a flowchart of the automatic transaction control routine 200 executed by the ATM 20A. FIG. 6 shows a flowchart of the account inquiry processing routine 300 to be executed by the host 10A of the financial institution A, the account inquiry processing routine 400 to be executed by the network approval host 50, and an account confirmation processing routine 500 to be executed by the host 10B of the financial institution B. FIG. 7 is a flowchart of a processing routine 310 of transaction notification to other financial institution to be executed by the host 10A of the financial institution A, a transaction notification processing routine 410 to be executed by the network approval host 50, and a processing routine 510 of transaction accepted by other financial institution, to be executed by the host 10B of the financial institution B.

In the ATM 20A, when the customer performs selecting operation of transaction, the type of the selected transaction is determined (step 201) by executing the automatic transaction control routine 200 shown in FIG. 4. When the customer selects a withdrawal transaction, a control sequence for a withdrawal transaction of which will be described hereinlater by referring to FIG. 5 is executed. When the customer selects a deposit transaction, a control sequence for a deposit transaction described hereinbelow is executed. If a transaction other than deposit is selected, other transaction processing corresponding to the transaction type selected by the customer is executed (202).

When the deposit transaction is selected, the ATM 20A requests the customer to insert a cash card into the card reader 22 and reads out the account number and other customer information from the inserted cash card (203). The ATM 20A refers to the account identification table 31 on the basis of the account number or the financial institution identifier included as a part of the customer information, determines whether the used cash card is a card issued by the own organization (financial institution A) or not (204), if YES, after executing a known ordinary deposit processing (205), returns the card (206) , and returns to the initial state to wait for the next customer's operation.

If the inserted cash card is a card issued by other financial institution having a tie-up with the financial institution A with respect to the automatic transaction (207), the ATM 20A sends an account inquiry message inquiring about the account number of the cash card to the financial institution host 10A (208), and waits for a response from the host (209). If the issuer of the inserted cash card is not the financial institution A nor any tie-up financial institution, the ATM 20A returns the card (206), and returns to the initial state to wait for the next customer's operation.

When the account inquiry message is received from the ATM 20A, the financial institution host 10A executes the account inquiry processing routine 300 shown in FIG. 6 and determines whether the inquired account number is of an international cash card (foreign account) or not (301). If the inquired account number is of a foreign account, the ATM 20A sends to the network approval host 50 a foreign account inquiry request message including the identifier of the financial institution A and the communication address of the financial institution host 10A as transmission source information (302), and waits for a response to the message (304). If the inquired account number is of other domestic financial institution, the ATM 20A transmits a domestic account inquiry message to the financial institution (303) and waits for a response to the message (304). The destination address of the domestic account inquiry message is retrieved from the communication address table 13A on the basis of the financial institution identifier extracted from the inquired account number.

When the foreign account inquiry request message is received from the financial institution host 10A, the network approval host 50 executes the account inquiry routine 400, transmits an account inquiry message to the host of the financial institution as the issuer of the international cash card known from the inquired account number (401) and waits for a response to the message (402). The address of the account inquiry message is known by searching the communication address table 53 on the basis of the identifier of the financial institution extracted from the inquired account number.

When the account inquiry message is received, the host 10B of the financial institution B as the issuer of the international cash card executes the account confirmation processing routine 500, reads out file data corresponding to the inquired account number from the customer account data file 11B, and confirms the validity, account balance, and the like of the cash card used this time (501). When the customer's personal identification number (PIN) is included in the account inquiry message, the host 10B compares the personal identification number entered by the customer and the personal identification number pre-registered in the customer account file 11B, transmits a response message indicative of the inquiry result to the network approval host 50 (502) and, after that, terminates the routine 500.

On receipt of the response message indicative of the inquiry result from the financial institute host 10B, the network approval host 50 retrieves information regarding a handling fee determined by the financial institution A making the account inquiry and the financial institution B as an inquiry destination (transmitter of the response message) from the handling fee table 52, transfers the response message including the handling fee information added to the account inquiry result to the financial institution host 10A (404), and terminates the routine 400.

On receipt of the response message from the network approval host 50, the financial institution host 10A transfers the received response message to the ATM 20A as the sender of the account inquiry (305), and terminates the routine 300.

On receipt of the response message from the financial institution host 10A, as shown in FIG. 4, the ATM 20A determines whether the automatic transaction is approved or not from the account inquiry result (210). If it is determined from the account inquiry result that the automatic transaction should not be conducted, the ATM 20A returns the card (206), and returns to the initial state to wait for the next customer's operation. If it is determined from the account inquiry result that the automatic transaction is approved, the ATM 20A outputs a deposit operation guidance onto the display screen, opens a cash slot, and waits until the customer finishes the depositing operation (211).

When cash in Japanese yen is thrown into the cash slot and the cash slot is closed, a currency conveyor mechanism is driven. The cash is sent one by one to a currency discrimination apparatus and a deposit amount is automatically calculated from the result of discrimination (212). After the counting of the deposit amount by the currency discrimination is finished, the ATM 20A calculates the handling fee on the basis of the handling fee information notified from the network approval host 50 and displays the handling fee together with the deposited amount on the display screen (213), and waits for a response from the customer.

The ATM 20A judges the response of the customer to the deposited amount and handling fee displayed on the display screen (214). If the customer performs an input operation of canceling the deposit transaction, the ATM 20A conveys the cash automatically calculated and temporarily stored to a cash return slot by the cash conveyer mechanism (216), returns the cash card (215), confirms that the customer takes out the cash and the cash card, and returns again to the initial state to wait for the next customer's operation.

In the case where the customer performs an input operation of agreeing (confirming) the deposit transaction with respect to the deposited amount and handling fee displayed on the display screen, the ATM 20A transmits a request message of depositing money to the customer's account which has been already inquired to the financial institution host 10A (218), and waits for a response from the financial institution host 10A (219). When it costs the customer a handling fee in the deposit transaction of this time, not only the deposit amount but also the handling fee in Japanese yen and its breakdown are indicated in the deposit request message.

The financial institution host 10A having received the deposit request message executes a processing routine 310 of transaction notification to other financial institution as shown in FIG. 7. In the routine, it is determined whether the account number to receive the deposit amount is a foreign account or not (311). If the account number is of a foreign account, the host 10A transmits a foreign account transaction notification request message to the network approval host 50 (312), and waits for a response message from the network approval host 50 (314). If the account number is of a domestic financial institution, the financial institution host 10A transmits a transaction notification message to this domestic financial institution (313), and waits for a response message (314).

On receipt of the foreign account transaction notification request message from the financial institution host 10A, the network approval host 50 executes the transaction notification routine 410. In the transaction notification routine 410, based on the identifier of the financial institution A acting as a transmitter of the transaction notification request message in the automatic transaction and the identifier of the financial institution B having the account to receive the deposit amount and acting as the destination of notification of the transaction notification request message, the country code or denomination of currency of each of the transmitter and the destination of notification are determined. The network approval host 50 retrieves the exchange rate between the two countries with reference to the exchange rate table 51, and converts the deposit amount and the handling fee in Japanese yen indicated in the received message into the deposit amount in U. S. dollars (411). After that, the network approval host 50 transmits a transaction request message (in this example, the deposit notification request message) of the converted currency to the host 10B of the American financial institution B having the account to receive the deposit amount (412), and waits for a response to the message (413).

The host 10B of the financial institution B having received the transaction notification message performs a deposit/withdrawal data processing on the customer's account designated by the received message in the customer's account file 11B (511) by executing the processing routine 510 for the transaction accepted by the other financial institution, and transmits a response message indicative of completion of the transaction to the network approval host 50 (512). In the case where it costs the costumer a handling fee, a processing of crediting the customer's account for the amount corresponding to the deposit amount and a processing of debiting the customer's account for the amount corresponding to the handling fee are performed in the deposit/withdrawal data processing (511). After that, the financial institution host 10B records history data of the inter-financial institution transaction regarding the deposit/withdrawal transaction of this time performed between the financial institutions A and B (513), and terminates the routine 510.

On receipt of the response message from the financial institution host 10B, the network approval host 50 transfers the message to the financial institution host 10A (414) , and terminates the routine 410. On receipt of the response message from the network approval host 50, the financial institution host 10A replies the transaction result to the ATM 20A conducting the automatic deposit transaction (315). The financial institution host 10A checks the transaction result in the received response message (316), records the transaction data of this time as a inter-financial institution transaction (317) when it is found that the transaction has been normally conducted, and terminates the routine 310.

Referring again to FIG. 4, on receipt of the response message of the depositing process from the financial institution host 10A, the ATM 20A checks the deposit processing result (220). When it is found that the deposit processing has been normally performed, the ATM 20A issues a deposit slip showing the transaction result and returns the cash card (221). After that, the ATM 20A stores the temporarily stored deposit money into the ATM money box (222) , and returns again to the initial state to wait for the next customer's operation.

In the case where the customer having the account in the financial institution B selects the withdrawal transaction through the ATM 10A by using the international cash card, as shown in FIG. 5, the ATM 10A reads out the account number and other information from the cash card (230) and asks the customer to enter the pre-registered personal identification number (231) and a withdrawal amount (232). After that, the ATM 10A determines whether the cash card is a card issued by the own financial institution (financial institution A) or not (233). If it is the cash card issued by the own financial institution, the ATM 10A executes a known ordinary withdrawal processing (234), returns the card (235), and returns again to the initial state to wait for the next customer's operation.

If the inserted cash card is a card issued by a financial institution having a tie-up with the financial institution A with respect to the automatic transaction (236), the ATM 10A transmits an account inquiry message, which includes the personal identification number entered by the customer, for inquiring the account of the cash card number to the financial institution host 10A (237) and waits for a response from the host (238). If the issuer of the inserted cash card is not the financial institution A nor the tie-up financial institution, the ATM 10A returns the card (235), and returns again to the initial state to wait for the next customer's operation.

On receipt of the account inquiry message, as described by referring to FIG. 6, the financial institution host 10A executes the account inquiry processing routine 300, the network approval host 50 executes the account inquiry processing routine 400, and the host 10B of the financial institution B acting as the issuer of the international cash card executes the account confirmation processing routine 500.

In the case of the withdrawal transaction, the response message to the account inquiry is generated and transmitted to the network approval host 50 in the form including the result of comparison between the personal identification number entered by the customer and the pre-registered personal identification number. The response message is transferred to the financial institution host 10A after adding the handling fee information by the network approval host 50 and notified to the ATM 20A acting as the sender of the account inquiry.

When the response message is received from the financial institution host 10A, as shown in FIG. 5, the ATM 20A determines whether the automatic transaction is approved or not from the account inquiry result (239). If it is determined from the account inquiry result that the automatic transaction should not be conducted, the ATM 20A returns the card (235), and returns again to the initial state to wait for the next customer's operation.

If it is determined from the account inquiry result that the automatic transaction is approved, the ATM 20A displays the handling fee on the display screen (240) and waits for a response from the customer. The ATM 20A judges the response from the customer to the displayed handling fee (241), returns the cash card (235) when the customer performs an input operation of canceling the withdrawal transaction, and returns again to the initial state to wait for the next customer's operation. In the case where the customer performs an input operation of agreeing (confirming) the withdrawal transaction with the handling fee displayed on the display screen, the ATM 20A transmits a withdrawal request message to the financial institution host 10A (242), and waits for a response from the financial institution host 10A (243).

In response to the withdrawal request message, as described by referring to FIG. 7, the financial institution host 10A executes the routine 310 of transaction notification to other financial institution, the network approval host 50 executes the transaction notification processing routine 410, and the host 10B of the financial institution B executes the processing routine 510 of transaction accepted by other financial institution. In the case of the withdrawal transaction, a process of debiting the amount corresponding to the withdrawal amount from the customer's account designated by the received message in the customer's account data file 11B and a process of debiting the handling fee from the customer's account as necessary are performed. A response message transmitted on completion of the transaction from the host 10B of the financial institution B is transferred to the financial institution host 10A via the network approval host 50, and is sent to the ATM 20A conducting the automatic transaction.

When the response message of the withdrawal processing is received from the financial institution host 10A, the ATM 20A checks the processing result of withdrawal transaction (244). When it is found that the withdrawal transaction processing has been normally performed, the ATM 20A operates a currency paying mechanism to pay the currency corresponding to the withdrawal amount designated by the customer (245), issues a slip showing the transaction result, returns the cash card (246), and returns again to the initial state to wait for the next customer's operation.

In the case where an ATM of the structure having the bill/check recognizing and conveyer mechanism 29 shown in FIG. 3 is applied as the ATM 20A, the customer can select, as a type of deposit transaction, either a deposit transaction by cash or a deposit transaction by a bill or check. The deposit transaction by cash and the deposit transaction by a bill or check are similar to each other except for an object to be discriminated (step 212), an object to be returned when the transaction was not realized (step 216), and an object to be stored when the transaction is successfully conducted (step 222). When the deposit transaction by a bill or check is selected, it is sufficient to execute a control sequence basically similar to steps 203 to 222 in FIG. 4.

Specifically, in the automatic transaction control routine 200, when the deposit transaction with a bill or check is selected as a transaction type, in a manner similar to the deposit transaction by cash, after executing steps 203 to 208 in the flowchart of FIG. 4, a response of the result of the account inquiry from the host is waited. If the result of the account inquiry is positive, the ATM 20A waits for a deposit operation with a bill or check by the customer (211), discriminates the amount and authenticity of the bill or check by using image processing technique, and calculates the deposit amount (212). For example, in the case where a magnetic stripe for recording data necessary for bank transactions is adhered to a bill or check so as to adapt to an automatic process, the deposit amount can be counted by providing the recognizing and conveyer mechanism 29 with a magnetic stripe reading head.

In the foregoing embodiment, described is the case where the customer having an account in an American financial institution deposits or withdraws money in Japanese yen to or from the account by using the international cash card through the ATM 10A in Japan. Obviously, the invention is also applicable to a case where a customer having a cash card issued by a Japanese financial institution A deposits or withdraws money in dollars through the ATM 20B of the financial institution B during stay in U.S.A. In European countries where Euro has been introduced, ATMs may be arranged so that both the currency of each country and Euro are dealt during the currency transition period, both existing currencies and Euro are accepted for deposit, and only Euro is withdrawn to promote exchanging from the existing currencies to Euro.

In the embodiment, transactions between different financial institutions in Japan and U. S. A. have been described. Obviously, the invention can be also applicable to a case where a customer having a cash card issued by the financial institution A in Japan (or the financial institution B in U.S.A.) deposits or withdraws money in dollars (or yen) through the use of an ATM in a branch in U.S.A. of the financial institution A (or a branch in Japan of the financial institution B) during stay in U.S.A. (or Japan).

In the embodiment, conversion of the denomination from Japanese yen to U.S. dollars is carried out by the network approval host via which the communication is performed between the financial institution host 10A in Japan and the financial institution host 10B in U.S.A. However, the exchange rate between the two countries fluctuates according to the economic states of both countries. Therefore, it is advantageous for the customer to avoid deposit in yen when the Japanese yen is depreciated against U.S. dollar, and, to deposit in yen when the exchange rate fluctuates and the Japanese yen is appreciated. Consequently, it is preferable to present, for example, the exchange rate of the day and an amount converted in the U.S. dollars to the customer, and to allow the customer to determine whether the transaction should be conducted or not in consideration of the information and the transaction handling fee before approving the deposit transaction in step 214 in FIG. 4.

Specifically, as a modification of the embodiment, at the time of transferring the account inquiry response message from the financial institution host 10B in U.S.A., the network approval host 50 may retrieve the exchange rate from the exchange rate table in step 403, and transfer a response message of the account inquiry result including the exchange rate and the handling fee information to the financial institution host 10A. In this case, the ATM 10A may display the exchange rate and the handling fee on the display screen prior to the customer's depositing operation 211, or display a deposit amount in Japanese yen, a deposit amount in U.S. dollars converted by the exchange rate, and the handling fee in deposit amount display step 213.

Although the handling fee between the financial institution accepting the automatic transaction and the financial institution having the account is specified in the handling fee table 52 in the embodiment, in the case where a customer conducting an automatic transaction has to bear the cost necessary for running the network approval host or an organization replacing the network transaction, it is also possible to present a handling fee including these costs and deduct the handling fee from the transaction account.

According to the invention, it becomes possible for a customer to deposit or withdraw money to or from an account in his or her country in an online real time manner via an ATM with an international cash card during a stay in a foreign country, so that each customer can deposit or withdraw money at an optimum timing in consideration of the circumstances and the exchange rate. Thus, for example, there becomes no danger of theft of odd money, bill or check received and carried in overseas trip or overseas business trip. There become no troubles of bringing the odd money and securities back home and converting them into the currency of the customer's country or taking a procedure of sending money to the customer's account through a local financial institute.

In the invention, the exchange rate necessary to convert the currency of a country into the currency in another country where an automatic transaction is conducted and a handling fee determined between the financial institution of the account and the local financial institution where the automatic transaction is conducted are automatically retrieved and presented to the customer. Consequently, the customer can select whether the automatic transaction should be conducted or not at that time point. Therefore, for example, when the customer determines that the exchange rate of the day is not advantageous for depositing or feels that the handling fee is too large, the customer can cancel the transaction for a better exchange rate or find another financial institution of a lower handling fee. Thus, the automatic transaction advantageous for the customer is realized.

## Claims

1. An international-online automatic cash transaction system including a domestic financial institution host (10A) connected to an abroad financial institution host (10B) via an international network (110) and a plurality of automated teller machines (20A) connected to said domestic financial institution host via a domestic network (100X), comprising:
means (213, 240) for displaying, when a deposit or withdrawal transaction using an international cash card of which account is in a foreign financial institution is conducted by one of said automated teller machines, a handling fee required for the transaction to allow a customer to select whether the transaction should be continued or not before the transaction is completed; and
means (411) for automatically converting a transaction amount into an amount in a currency of the customer's account in accordance with an exchange rate at that time point and notifying the abroad financial institution of the resultant amount.

2. The international-online automatic cash transaction system according to claim 1, wherein said handling fee and said exchange rate are displayed before the transaction is completed.

3. The international-online automatic cash transaction system according to claim 1, further comprising a transaction intermediation system (50) connected to said international network (110) wherein in a process of conducting a deposit or withdrawal transaction using an international cash card by said automated teller machine, transaction data between said domestic financial institution host (10A) and the foreign financial institution (10B) as the issuer of said international cash card is communicated via said transaction intermediation system.

4. The international-online automatic cash transaction system according to claim 3, wherein conversion of said currency and management of the handling fee are carried out by said transaction intermediation system (50), and
said domestic financial institution host (10A) obtains handling fee information from said transaction intermediation system at the time of inquiring of said foreign financial institution about the account and notifies said automated teller machine of the handling fee information.

5. The international-online automatic cash transaction system according to claim 2, wherein said domestic financial institution host (10A) has a management table (51) for indicating an exchange rate between a domestic currency and foreign currencies and a management table (52) for indicating handling fee information regarding an automatic transaction to be conducted between a domestic financial institution and foreign financial institutions, thereby to convert said currency and notify said automated teller machine of the handling fee.

6. The international-online automatic cash transaction system according to claim 2, wherein some of said automated teller machines (20A) has means (26, 29) for accepting deposit by cash in the domestic currency, a bill, and a check.
